# EUROPEAN PATENT APPLICATION

(11) **EP 1 564 928 A1**
(43) Date of publication of application: **17.08.2005**
(21) Application number: 04290430.0
(22) Date of filing: 17.02.2004
(51) Int. Cl.: H04L 9/32

(54) **Multiple users authertication method.**

(71) Applicant: Axalto S.A., 92120 Montrouge (FR)
(72) Inventor: Amador, Eric, c/o Schlumberger Systèmes, 92120 Montrouge (FR)
(74) Representative: Cassagne, Philippe M.J.

(57) **Abstract**

Passwords for multiple users authentication are generated by :
- generating a polynomial (Y= C0 + C1.X + C2.X²+ ...+ Cn.Xⁿ) having a degree (n) inferior to a minimum number of user (nu) required for authentication, each coefficient (C0, C1, C2, ..., Cn) of the polynomial being randomly generated,
- generating a global password (GPIN) based on the coefficients of the polynomial,
- generating an individual password (IPIN₁, IPIN₂, ..., IPINₙᵤ, ..., IPINₘ) by combining a pre-image (X) and an image (Y) pair verifying the polynomial, said individual password generation step being repeated at least for the minimum number of user required for authentication,
- assigning to each user (N1, N2, ..., Nnu, ..., Nm) an individual password (IPIN1, IPIN2, ..., IPINnu, ..., IPINm),
- assigning the global password to a protected function.

The access to the protected function requires a multiple users authentication by :
- entering the individual password of the at least minimum number of user required for authentication (IPIN1, IPIN2, ..., IPINnu),
- reconstituting the pre-image (X) and image (Y) pairs based on each entered individual password,
- calculating the coefficients of the polynomial based on the reconstituted pairs,
- recombining the coefficients of the polynomial into a recombined global password (RGPIN),
- authorizing access to the protected function when the recombined global password (RGPIN) matches the global password (GPIN).

## Description

### Field of the invention

The invention relates to a multiple user authentication method, more precisely to a method for generating passwords for multiple users authentication and to a method for accessing to a protected function (devices functions or application functions) requiring a multiple users authentication. The invention also relates to a computer program product for making a computer generating passwords for multiple users authentication and managing access to a protected function requiring a multiple users authentication.

The invention can be implemented on legacy single user password management or new authentication system.

### Background of the invention

It is known that most applications or devices require the user to identify himself as a single user with its password. Typical examples are access to a Personal Computer or to user emails box, or enabling a transaction with a bank card, or accessing to a mobile telecommunication network, or administrating computers network... etc. The authentication process is done by typing the user own password, key or code also generally known as PIN (Personal Identification Number) via a keyboard of the device offering the functions, and checking whether the entered PIN matches with a PIN stored in the device. These applications or devices do not support multiple user access control to gain access to a function of a device or to a function of an application. Single user access control means that it is possible to restrict the access to a single user, but it is not possible to require more then one user to authenticate before giving access to a sensitive function.

It is also know that for some highly sensitive applications or devices (in term of security for example) the responsibility to access to those functions are split to more then one user. In such system it is required that multiple users identify and authenticate themselves with their own passwords. Multiple users access control means that the access to a function of a device or to a function of an application is given only if several users are authenticated independently of each other.

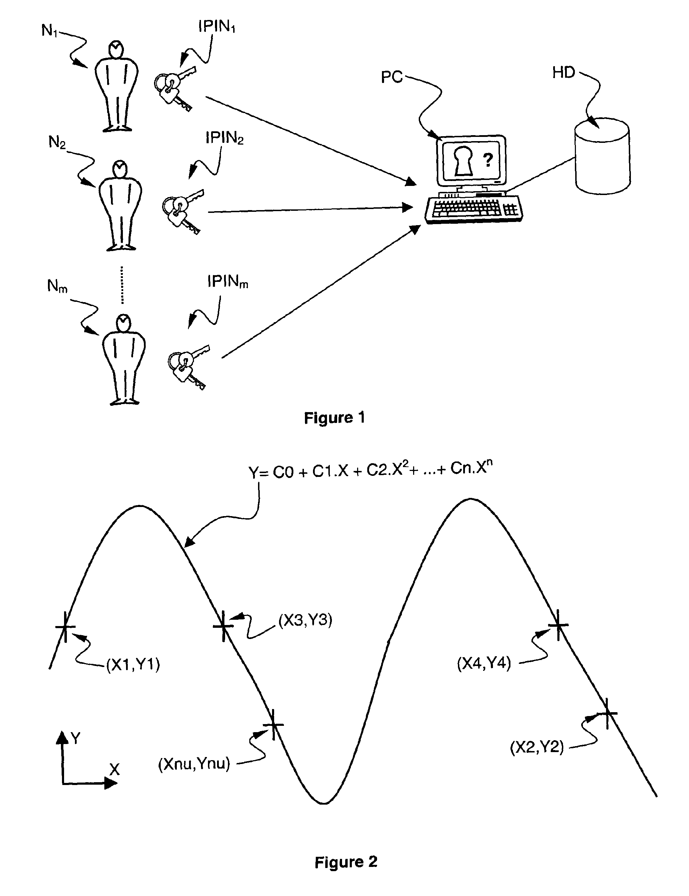

Figure 1 shows schematically an example of multiple users authentication for authorizing access to confidential information for example (e.g. bank card numbers) stored on the hard disk HD of a computer PC. According to the prior art authentication method and system, it is required that the users N₁, N₂, ..., Nₙᵤ, ..., Nₘ identify themselves with their respective individual passwords IPIN₁, IPIN₂, ... IPINₘ independently and at the same time or shortly one after the other. The access to the confidential information stored on the hard disk of the computer is denied when at least one user could not authenticate himself. Also, such an authentication method means that all the users user₁, user₂, ..., userₙ required for authentication are gathered at the same time.

### Object and summary of the invention

The invention is based on the application of the polynomial recombination principle to enable multiple user access control.

According to the invention, the method consists in :
- a function that given the number of users that are required for authentication, returns an encoded random polynomial.
- a function that given the polynomial coefficients, return an encoded value constituting the global password GPIN, for example by applying a one-way function (e.g. XOR or SHA) to the encoded polynomial coefficients. This global password is stored into a PIN verification system for controlling the access to a password protected function (in the device or application to be protected).
- a function that given the polynomial, return a random value (constituting a password) that verifies the polynomial expression. This function is called for each potential authorized user. It is the responsibility of each user to backup this value which is its personal password. These values are not stored into the device or the application.
- a function that combines personal passwords into a recombined global password. This recombined global password is compared to the global password stored into a PIN verification system for controlling the access to the password protected function.

The polynomial has a degree which depends of the number of users that are required for authentication. The polynomial is calculated randomly. It is possible to encode that expression as a byte string that can be fed into a one-way function to be seen as a password.

Given this polynomial it is possible to generate an infinite number of passwords that matches with the polynomial.

Once the global and individual passwords are generated and stored, the polynomial (its coefficients) are lost (i.e. the coefficients are not anywhere). It is also not possible to generate any new individual password.

The existing PIN registration & verification system of the device or the application can be kept unchanged.

Additional polynomial generation and password generation system are added to the existing system to enable the implementation of the method according to the invention.

The administrator of the system needs to define the minimum number of users that are required for authentication and the maximum number of users that can be authenticated.

The system generates random passwords for all potential user and the global password. The global password is a value resulting of a one-way function applied to the coefficients of the polynomial. The global password is registered into the legacy system.

In order to gain access to the sensitive functions, the users needs to authenticate themselves. The polynomial PIN checking system allows the users to enter their passwords which are recombined into a global password. The global password is fed into the PIN verification system and give access to the sensitive functions in case of positive match.

### Brief description of the drawings

The following detailed description, given by way of example, will be best understood with the accompanying drawings in which :
- Figure 1 shows schematically an example of multiple users authentication for authorizing access to a function of a computer according to prior art,
- Figure 2 illustrates pre-image, image and password polynomial based calculation,
- Figure 3 shows an example of passwords generation for multiple users according to the method of the invention, adapted to a new authentication system,
- Figure 4 shows an example of passwords generation for multiple users according to the method of the invention, adapted to a legacy authentication system,
- Figure 5 shows an example of multiple users authentication for accessing to a protected function according to the method of the invention, adapted to a new authentication system,
- Figure 6 shows an example of multiple users authentication for accessing to a protected function according to the method of the invention, adapted to a legacy authentication system.

### Detailed description of the invention

A complete authentication system (for either new or legacy system) comprises two parts : a passwords generator for multiple users AS1 and a multiple users authentication system AS2 for accessing to a protected function.

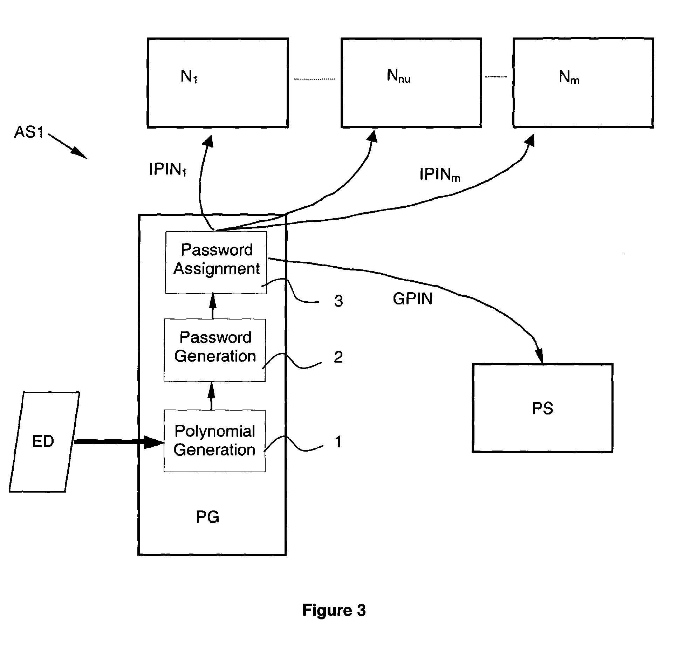

An example of passwords generation for multiple users according to the method of the invention, adapted to a new authentication system is shown on Figure 3.

The password generator PG is either a hardware or a software module (called module in the following description). It provides the following functions :
- generation of individual passwords,
- generation of global password,
- assigning the individual passwords to the users, and
- assigning the global password to the password verification system.

A request to generate and assign passwords is made to the passwords generator Pg. This request is based on entry data ED comprising the minimum number nu of users that are required to perform the authentication, and the total number m of users that can perform the authentication. These entry data ED are fed to a polynomial generation module 1. The polynomial generation module 1 generates randomly the coefficients C0, C1, C2, ..., Cn of a polynomial Y under the form Y= C0 + C1.X + C2.X²+ ...+ Cn.Xⁿ. The degree n of the polynomial is inferior to the minimum number of user nu required for authentication. Alternatively, when the constant coefficient C0 is equal to zero the degree (n) of the polynomial Y= C0 + C1.X + C2.X²+ ...+ Cn.Xⁿ is equal to the minimum number of user (nu) required for authentication.

A passwords generation module 2 generates a global password GPIN based on the coefficients C0, C1, C2, ..., Cn of the polynomial Y. The global password GPIN is a value obtained by applying a one-way function on the coefficients. The aim is that the authentication system will be able to determine what was the coefficients based on the global password. A one-way function is for example a XOR function or a hash (SHA) function. For example, global password GPIN is a XOR value of the coefficients C0, C1, C2, ..., Cn of the polynomial Y : C0 xor C1 xor C2 xor ... xor Cn. This particular way of obtaining the global password GPIN will be detailed below in two examples.

The passwords generation module 2 also generates m individual passwords IPIN₁, IPIN₂, ..., IPINₘ corresponding to the total number m of users that can perform the authentication ₘ. Each individual password comprises for example the encoding of a pair of value constituted by a pre-image X and an image Y verifying the polynomial Y=function(X) as shown on Figure 2. The individual password is a value obtained by applying a one-way function on the pre-image X and the image Y. The aim is that the user retain a password as a single value and that the authentication system is able to determine what was pre-image X and the image Y based on the individual password. Therefore, all kinds of function (e.g. XOR function, hash function...etc) enabling to encode the pre-image X and the image Y in a single value representing a password for the user and enabling to decode the pre-image X and the image Y from the single value are convenient for the methods according to the invention. Particular way of obtaining the individual passwords will be detailed below in 2 examples.

A passwords assignment module 3 distributes and transfers in secure way (this secure distribution proceeding is known by the skilled person and thus not described) :
- the individual passwords IPIN₁, IPIN₂, ..., IPINₘ to the users N₁, N₂, ..., Nₘ, each user receiving only one password,
- the global password GPIN to a password storage PS of the authentication system protecting the access to the protected function (application or device).

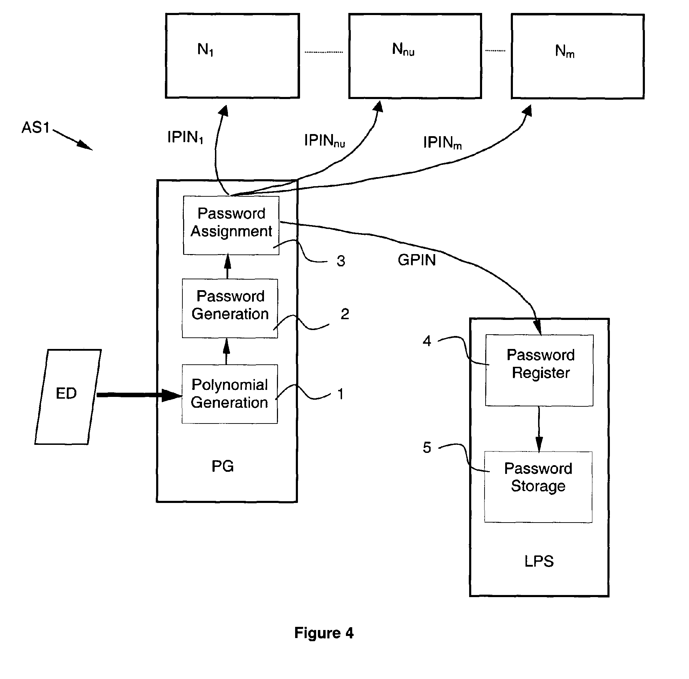

Figure 4 shows an example of passwords generation for multiple users according to the method of the invention which is adapted to a legacy authentication system. The main difference with the authentication system of Figure 3 is that the legacy system does not support multiple user authentication as such. In order to store the global password GPIN, it is firstly required to register 4 the global password and secondly to store 5 the global password in the legacy password storage LPS of the authentication system protecting the access to the protected function (application or device).

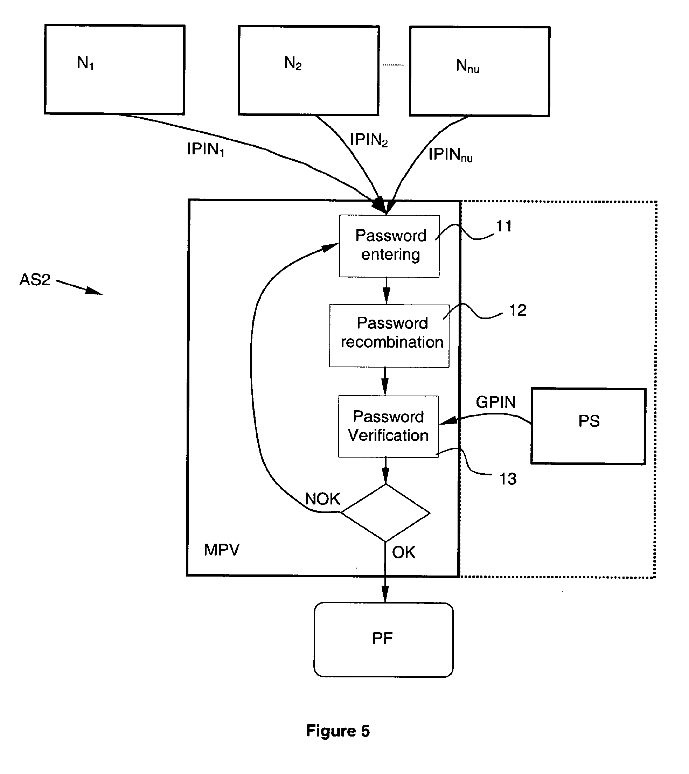

An example of multiple users authentication for accessing to a protected function according to the method of the invention, adapted to a new authentication system is shown on Figure 5.

The multiple password verification system MPV is either a hardware or a software module. It provides the following functions :
- recombination of the individual passwords in a recombined password,
- verification of the recombined password relatively to the stored global password, and
- authorizing or denying access to the protected function.

When trying to access to a protected function PF, a password entering module 11 prompt the users N₁, N₂, ... Nₙᵤ for entering their individual passwords IPIN₁, IPIN₂, IPINₙᵤ respectively. At least the minimum number of user nu is required to enter their password. These minimum number of nu users can be chosen among the total number of user m having received an individual password (received as above described). The password can be entered one after the other in a predetermined period of time or simultaneously.

A password recombination module 12 reconstitutes the pre-image X and image Y pairs (X₁,Y₁), (X₂,Y₂), ... (Xₙᵤ, Yₙᵤ) of each entered individual password IPIN₁, IPIN₂, IPINₙᵤ. Then, the module 12 calculates the coefficients C0, C1, C2, ..., Cn of the polynomial Y based on the reconstituted pairs (X₁,Y₁), (X₂,Y₂), ... (Xₙᵤ, Yₙᵤ). Finally, the module 12 recombines the coefficients C0, C1, C2, ..., Cn of the polynomial Y into a recombined global password RGPIN by applying a one-way function to the coefficients. It is to be noted that the decoding function enabling to decode the pre-image X and the image Y from the single value representing a password has to be coherent with the functionused to encode the pre-image X and the image Y in the single value (i.e. when a XOR function was used to encode, a reverse XOR function is used to decode).

A password verification module 13 checks whether the recombined global password RGPIN matches the global password GPIN stored in the password storage PS. In case of positive match, the access to the protected function PF is authorized. In case of a difference between the recombined global password RGPIN and the global password GPIN, the verification system prompt for a new entry of the individual password. It is also possible to include the usual counter (not shown) to block the access after a determined unsuccessful attempts to access to the protected function. The password storage PS can be external or part of the whole multiple password verification system MPV (indicated by dotted line).

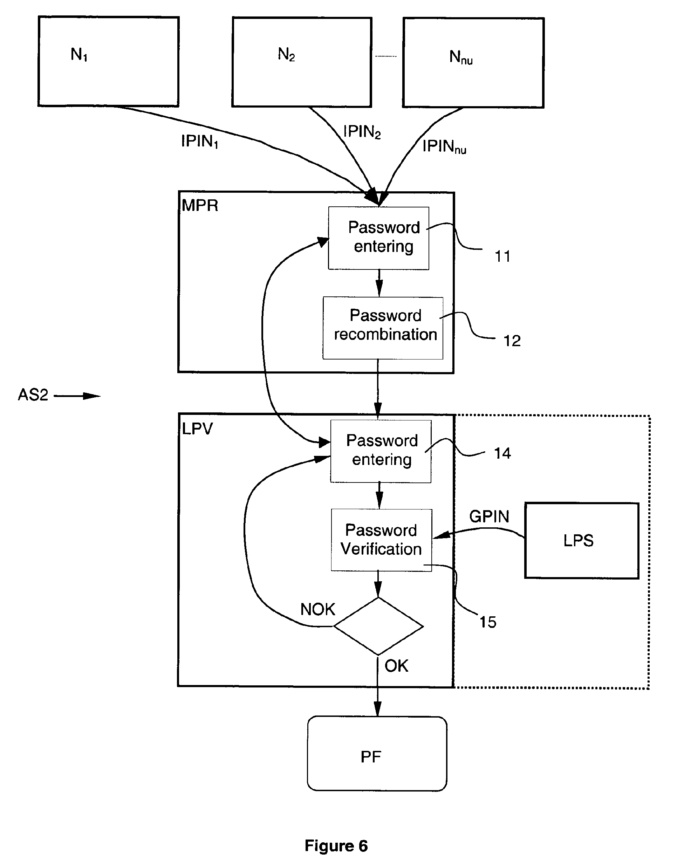

Figure 6 shows an example of multiple users authentication for accessing to a protected function according to the method of the invention, adapted to a legacy authentication system. The main difference with the authentication system of Figure 5 is that the legacy password verification system LPV does not support multiple user authentication as such. Consequently, after the multiple passwords recombination system MPR has calculated a recombined global password RGPIN in the same way described above in relation with Figure 5, the recombined global password RGPIN is submitted to the password entering module 14 of the legacy password verification system LPV as a unique password. A password verification module 15 of the legacy system checks whether the recombined global password RGPIN matches the global password GPIN stored in the legacy password storage LPS. In case of positive match, the access to the protected function PF is authorized. In case of a difference between the recombined global password RGPIN and the global password GPIN, the legacy verification system prompt for a new entry of the password. The multiple passwords recombination system MPR can detect this prompt for a new attempt and prompt for a new entry of the individual passwords. It is also possible to include a usual counter (not shown) to block the access after a determined unsuccessful attempts to access to the protected function. This counter can be implemented in the multiple passwords recombination system MPR or in the legacy password verification system LPV. The legacy password storage LPS can be external or part of the legacy password verification system LPV (indicated by dotted line on Figure 6).

As an alternative embodiment of the methods according to the invention, the password verification system can store both the global password GPIN and a particular user individual password. As a consequence, for dual user control it is necessary to use a polynomial of degree 2 instead of degree 1, and for n user control it is necessary to use a polynomial of degree n+1 instead of degree n. Thus, the users will never have the capability to restore the global password GPIN without the password verification system as one part of the secret is stored into the system. This enables to further improve the security of the authentication method.

Two examples of passwords generation and multiple users authentication according to the methods of the invention will be described.

### First example - dual control implementation:

The polynomial generated is of the form Y = C₀ + C₁.X. The coefficients C₀ and C₁ are randomly generated (for example C₀ = 11 and C₁ = 22).

The global password GPIN is generated by applying an XOR function to the coefficients : C₀ XOR C₁ (for example GPIN = 11 XOR 22).

The users individual password are generated by calculating for a value X generated randomly, a value Y satisfying to the equation Y = C₀ + C₁.X (for example Y = 11 + 22.X).

The individual password generation must be done at least twice. More individual passwords may be generated to have the possibility to access to the protected function by choosing two users among a number of users superior to two, for example :
- a first user N₁ will be assigned an individual password encoded from the pair of values (X1,Y1) (for example X1 = 1 and Y1 = 11 + 22x1 = 33 and individual password is a string 0133),
- a second user N₂ will be assigned the individual password encoded from the pair of values (X2,Y2) (for example X2 = 3 and Y2 = 11 + 22x3 = 77 and individual password is a string 0377),
- a third user N₃ will be assigned the individual password encoded from the pair of values (X3,Y3) (for example X3 = 0 and Y3 = 11 + 22x0 = 11 and individual password is a string 0011), ...etc.

When the access to the protected function is required, two users chosen among the three users mentioned above will have to enter their individual password :
- the first user N₁ enters its individual password (for example 0133) decoded into the pair of value (X1 ,Y1) (for example X1 = 1 and Y1 = 33),
- the second user N₂ enters its individual password (for example 0377) decoded into the pair of value (X2,Y2) (for example X2 = 3 and Y2 =77).

Given the two decoded individual passwords (X1,Y1) and (X2,Y2), using a standard mathematical algorithm (in this case linear regression), it is possible to calculate the recombined polynomial (Y = C_{0R} + C_{1R}.X), and thus the recombined global password (RGPIN = C_{0R} XOR C_{1R}) (in the example a linear regression based on [X1 = 1 ; Y1 = 33] and [X2 = 3 ; Y2 =77] gives C_{0R} = 11 and C_{1R} = 22 and RGPIN = 11 XOR 22). The recombined global password is used to check access rights. If it matches with the global password, the users will get access to the protected function (e.g. a service or an application).

### Second example - n users control implementation:

The polynomial generated is of the form Y = C₀ + C₁.X + C₂.X² + ... + Cₙ.Xⁿ. The coefficients C₀, C₁, C₂...Cₙ are randomly generated.

The global password is generated by applying an XOR function to the coefficients : C₀ XOR C₁ XOR C₂ XOR....XOR Cₙ.

The users individual password are generated by calculating for a value X generated randomly, a value Y satisfying to the equation Y = C₀ + C₁.X + C₂.X² + ... + Cₙ.Xⁿ.

The individual password generation must be done at least n time. More individual passwords may be generated to have the possibility to access to the protected function by choosing nu users among number m of users, for example (see also Figure 2):
- a first user N₁ will be assigned the individual password encoded from the pair of values (X1,Y1),
- a second user N₂ will be assigned the individual password encoded from the pair of values (X2,Y2),
   ...etc...
- a nu^{th} user Nₙᵤ will be assigned the individual password encoded from the pair of values (Xnu,Ynu), and
- a m^{th} user Nₘ will be assigned the individual password encoded from the pair of values (Xm,Ym).

When the access to the protected function is required, the minimum number of users nu chosen among the m users mentioned above will have to enter their individual password :
- the first user N₁ enters its individual password decoded into the pair of value (X1 ,Y1),
- the second user N₂ enters its individual password decoded into the pair of value (X2,Y2),
   ...etc...
- the nu^{th} user Nₙᵤ enters its individual password decoded into the pair of value (Xnu,Ynu).

Given the nu individual decoded passwords (X1,Y1), (X2,Y2) ... (Xnu,Ynu), using a standard mathematical algorithm, it is possible to calculate the recombined polynomial (Y = C_{0R} + C_{1R}.X + C_{2R}.X² + ... + C_{nR}.Xⁿ), and thus the recombined global password (RGPIN = C_{0R} XOR C_{1R}... XOR C_{nR}). The recombined global password is used to check access rights. If it matches with the global password, the users will get access to the protected function (e.g. a service or an application).

The method for generating passwords for multiple users authentication and the method for accessing to a protected function requiring a multiple users authentication according to the invention are advantageous because :
- it is possible to choose the users for authentication among a list of potential users, thus enabling to access to protected function even if some users are not available (illness, vacation...) or if some users lost or forget their individual passwords,
- it is possible to implement the methods of the invention for new device or application and also for legacy applications or devices.

## Claims

1. A method for generating passwords for multiple users authentication, comprising the steps of :
- generating a polynomial (Y= C0 + C1.X + C2.X²+ ...+ Cn.Xⁿ) having a degree (n) inferior to a minimum number of user (nu) required for authentication, each coefficient (C0, C1, C2, ..., Cn) of the polynomial being randomly generated,
- generating a global password (GPIN) based on the coefficients (C0, C1, C2, ..., Cn) of the polynomial (Y),
- generating an individual password (IPIN₁, IPIN₂, ..., IPINₙᵤ, ..., IPINₘ) by combining a pre-image (Xᵢ) and an image (Yᵢ) in a pair (X₁,V₁ ; X₂,Y₂ ; ... ; Xₙᵤ,Yₙᵤ ; ... ; Xₘ,Yₘ) verifying the polynomial, said individual password generation step being repeated at least for the minimum number of user (nu) required for authentication,
- assigning to each user (N₁, N₂, ..., Nₙᵤ, ..., Nₘ) an individual password (IPIN₁, IPIN₂, ..., IPINₙᵤ, ..., IPINₘ),
- assigning the global password (GPIN) to a protected function.

2. A method for accessing to a protected function requiring a multiple users authentication, comprising the steps of :
- entering the individual password of the at least minimum number of user (nu) required for authentication (IPIN1, IPIN2, ..., IPINnu),
- reconstituting the pre-image (Xᵢ) and image (Yᵢ) pairs (X₁,Y₁ ; X₂,Y₂ ; ... ; Xₙᵤ,Yₙᵤ) based on each entered individual password,
- calculating the coefficients (C0, C1, C2, ..., Cn) of the polynomial (Y) based on the reconstituted pairs (Xᵢ, Yᵢ),
- recombining the coefficients (C0, C1, C2, ..., Cn) of the polynomial (Y) into a recombined global password (RGPIN),
- authorizing access to the protected function when the recombined global password (RGPIN) matches the global password (GPIN).

3. A method according to one of the preceding claims, wherein the global password (GPIN) is obtained by applying a one-way function to the values of the coefficients (C0, C1, C2, ..., Cn) of the polynomial (Y).

4. A method according to claim 3, wherein the global password (GPIN) is a XOR value of the coefficients (C0, C1, C2, ..., Cn) of the polynomial (Y) : C0 xor C1 xor C2 xor ... xor Cn.

5. A method according to claim 3, wherein the global password (GPIN) is a value obtained by applying a hash function to the coefficients (C0, C1, C2, ..., Cn) of the polynomial (Y) : C0 sha C1 sha C2 sha... sha Cn.

6. A method according to one of the preceding claims, wherein the individual password (IPIN₁, IPIN₂, ..., 1PINₙᵤ, ..., IPINₘ) is an encoded value obtained by applying a one-way function to the pre-image (Xᵢ) and image (Yᵢ) pairs (X₁,Y₁ ; X₂,Y₂ ; ... ; Xₙᵤ,Yₙᵤ ; ... ; Xₘ,Yₘ).

7. A method according to one of the claims 2 to 3, wherein the at least minimum number of user (nu) required for authentication is chosen among a group of user constituted by a maximum number of user (m) having an individual password generated according to the method of claim 1.

8. A method for generating passwords for multiple users authentication according to claim 1, wherein the degree (n) of the polynomial Y= C0 + C1.X + C2.X²+ ...+ Cn.Xⁿ is equal to the minimum number of user (nu) required for authentication when the constant coefficient C0 is equal to zero.

9. A computer program product comprising a computer readable medium, having thereon computer program code means, when said program is loaded, to make the computer execute a method for generating passwords for multiple users authentication as recited in claim 1.

10. A computer program product comprising a computer readable medium, having thereon computer program code means, when said program is loaded, to make the computer execute a method for accessing to a protected function requiring a multiple users authentication as recited in claim 2.
